# EUROPEAN PATENT APPLICATION

(11) **EP 2 963 626 A1**
(43) Date of publication of application: **06.01.2016**
(21) Application number: 15001877.8
(22) Date of filing: 25.06.2015
(51) Int. Cl.: G08B 7/06, G08B 17/00, G08B 25/00

(54) **FIRE ALARM APPARATUS INTERWORKING WITH MOBILE PHONE**

(30) Priority: 01.07.2014 KR 20140082112
(71) Applicant: Kim, Kyung Ju, Gyeonggi-do (KR)
(72) Inventor: Kim, Kyung Ju, Gyeonggi-do (KR)
(74) Representative: Zeuner Summerer Stütz

(57) **Abstract**

A fire alarm apparatus interworking with a mobile terminal comprises a plurality of wireless Access Points (APs) provided in a building, the plurality of wireless APs wirelessly accessing a mobile terminal entering the building to receive a phone number from the mobile terminal, a fire alarm receiving the phone number from the wireless APs to register the mobile terminal as a target terminal, transmitting positions of the wireless APs in the building and an electronic map of an inside of the building to the target terminal through the wireless APs, and when sensing a fire, transmitting a position of the fire and an alert message to the target terminal, and the mobile terminal receiving and storing the positions of the wireless APs and the electronic map, and when receiving the alert message, outputting a map image and a voice message for guiding to an exit.

## Description

### CROSS-REFERENCE TO RELATED APPLICATIONS

This patent application claims priority to Korean Patent Application No. 10-2014-0082112, filed on July 1, 2014, in the Korean Intellectual Property Office, the disclosure of which is incorporated by reference herein in its entirety.

### TECHNICAL FIELD

The present disclosure relates to fire alarm apparatuses, and more specifically, to fire alarm apparatuses that may interwork with mobile phones.

### DISCUSSION OF RELATED ART

A fire alarm apparatus or system may be used to detect and alert people through visual and audio appliances when smoke/fire is present. Conventional fire alarm apparatuses merely go off sounds or illumination to alert people to the outbreak of a fire and fails to achieve effective evacuation.

### SUMMARY

According to an embodiment of the present disclosure, a fire alarm apparatus interworking with a mobile terminal comprises a plurality of wireless Access Points (APs) provided in a building, the plurality of wireless APs wirelessly accessing a mobile terminal entering the building to receive a phone number from the mobile terminal, a fire alarm receiving the phone number from the wireless APs to register the mobile terminal as a target terminal, transmitting positions of the wireless APs in the building and an electronic map of an inside of the building to the target terminal through the wireless APs, and when sensing a fire, transmitting a position of the fire and an alert message to the target terminal, and the mobile terminal receiving and storing the positions of the wireless APs and the electronic map, and when receiving the alert message, outputting a map image and a voice message for guiding to an exit. The mobile terminal may include an AP access module wirelessly accessing the wireless APs to transmit the phone number of the mobile terminal and to receive the positions of the wireless APs and the electronic map, an electronic map storage memory storing the positions of the wireless APs and the electronic map received from the fire alarm, a locator sensing the strength of radio signals received from at least three wireless APs to pinpoint the mobile terminal in the building, and an evacuation guiding unit grasping an exit adjacent to the mobile terminal in the building on the electronic map to indicate a direction of evacuation when the alert message is received.

The fire alarm may include a target terminal register receiving the phone number of the wireless APs and registering the mobile terminal as the target terminal, a fire sensor sensing an occurrence of the fire, the position of the fire, and a direction in which smoke flows, a message transmitter transmitting the alert message to the target terminal when the occurrence of the fire is sensed, and an electronic map database (DB) storing the electronic map and the positions of the wireless APs.

When a wireless link is disconnected for a predetermined time after the mobile terminal is registered as the target terminal, the target terminal may be deleted from a target terminal registration.

The fire alarm may send a request for capturing an image of a scene of the fire to a mobile terminal wirelessly linked to a wireless AP located adjacent to the fire, receive the captured image, and transmit the received captured image to a fire station.

The fire alarm may include a target terminal distribution detector identifying the number of mobile terminals wirelessly linked to a wireless AP to grasp a positional distribution of the mobile terminal in the building.

The message transmitter may transmit a positional distribution of mobile terminals in the building and the alert message to the target terminal. The evacuation guiding unit, at a highest priority, may guide the target terminal to an exit where a positional distribution of the mobile terminals in the building is smallest among a plurality of exits in the building.

The message transmitter may transmit the position of the fire and the direction in which the smoke flows and the alert message to the target terminal in the building.

The evacuation guiding unit may guide the target terminal to an exit farthest from the position of the fire among exits to which the flow of smoke is directed.

### BRIEF DESCRIPTION OF THE DRAWINGS

A more complete appreciation of the present disclosure and many of the attendant aspects thereof will be readily obtained as the same becomes better understood by reference to the following detailed description when considered in connection with the accompanying drawings, wherein:
FIG. 1 is a block diagram illustrating a fire alarm apparatus interworking with a mobile terminal according to an embodiment of the present disclosure;
Fig. 2 is a block diagram illustrating a fire alarm according to an embodiment of the present disclosure;
Fig. 3 is a block diagram illustrating a mobile terminal according to an embodiment of the present disclosure;
Fig. 4 is a view illustrating an example in which wireless APs are distributed in a building, according to an embodiment of the present disclosure;
Fig. 5 is a view illustrating an example of indoor positioning map matching using the strength of a Wi-Fi signal of a mobile terminal according to an embodiment of the present disclosure; and
Fig. 6 is a view illustrating an example in which a fire alarm navigation operates according to an embodiment of the present disclosure.

### DETAILED DESCRIPTION OF EMBODIMENTS

Hereinafter, exemplary embodiments of the inventive concept will be described in detail with reference to the accompanying drawings. The inventive concept, however, may be modified in various different ways, and should not be construed as limited to the embodiments set forth herein. As used herein, the singular forms "a," "an," and "the" are intended to include the plural forms as well, unless the context clearly indicates otherwise. It will be understood that when an element or layer is referred to as being "on," "connected to," "coupled to," or "adjacent to" another element or layer, it can be directly on, connected, coupled, or adjacent to the other element or layer, or intervening elements or layers may be present.

As used herein, the mobile terminal may include, but is not limited to, a mobile phone, a cellular phone, or a smartphone.

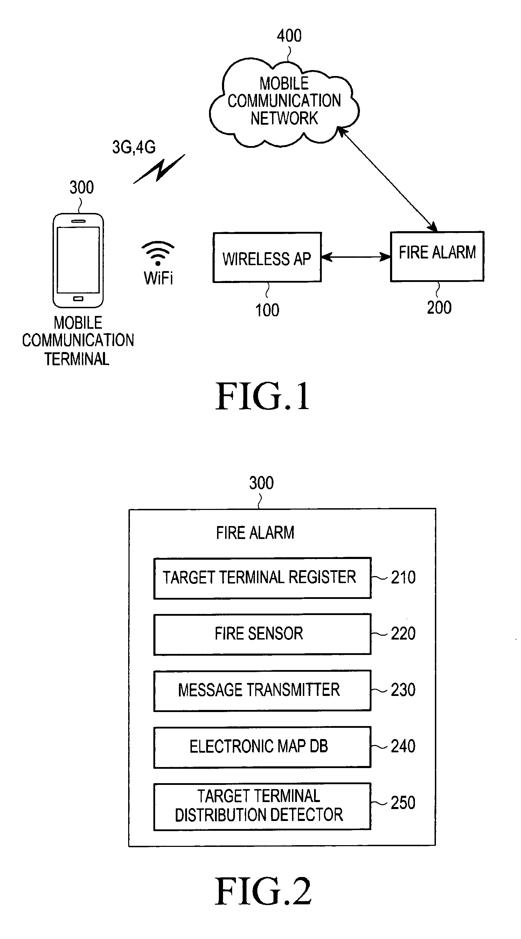

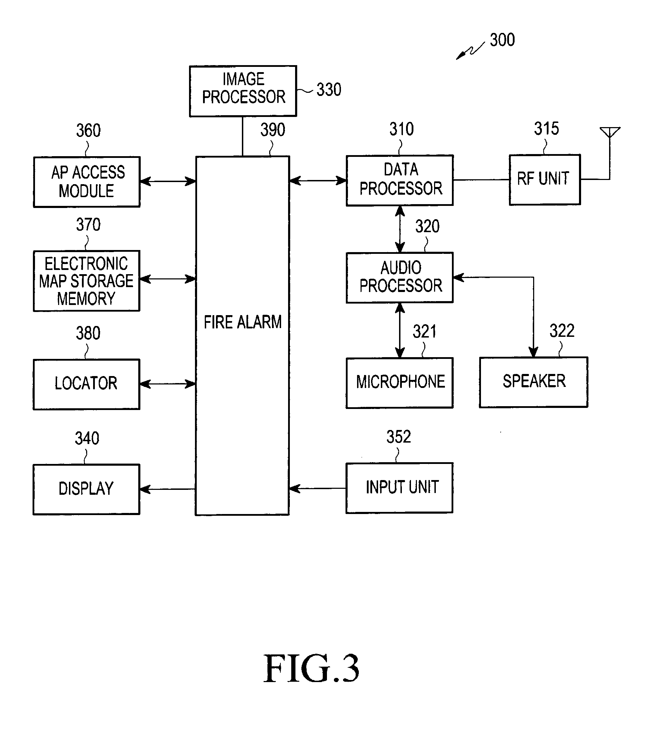

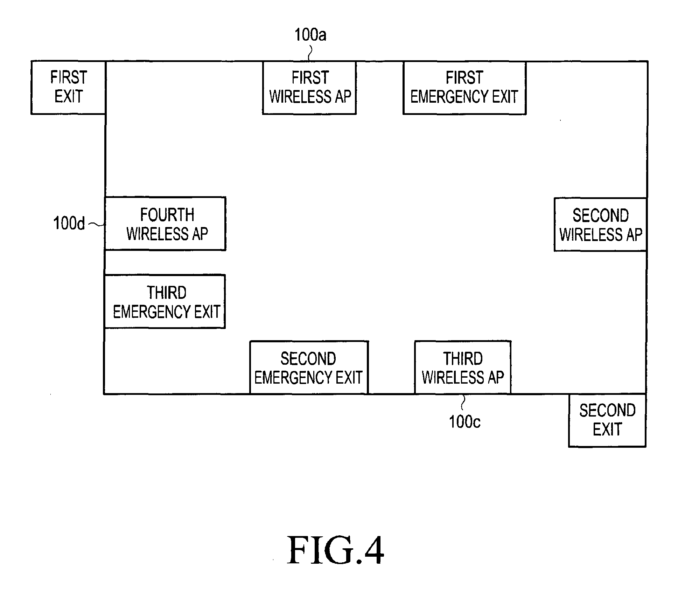

FIG. 1 is a block diagram illustrating a fire alarm apparatus interworking with a mobile terminal according to an embodiment of the present disclosure. Fig. 2 is a block diagram illustrating a fire alarm according to an embodiment of the present disclosure. Fig. 3 is a block diagram illustrating a mobile terminal according to an embodiment of the present disclosure. Fig. 4 is a view illustrating an example in which wireless APs are distributed in a building, according to an embodiment of the present disclosure.

According to an embodiment of the present disclosure, a fire alarm apparatus includes a plurality of wireless Access Points (APs) 100, a fire alarm 200, and a mobile terminal 300.

As shown in Fig. 4, the wireless APs 100 may be provided in a building. Each wireless AP 100 may wirelessly access the mobile terminal 300 in the building and may receive a phone number from the mobile terminal 300. Each wireless AP 100 may be a low-power wireless access device that may wirelessly access the mobile terminal 300 using Wireless Fidelity (Wi-Fi) and that may function as a base station in a wireless Local Area Network (WLAN). The wireless APs 100 may implement a short-range communication network enabling use of the wireless Internet within a predetermined distance. Each wireless AP 100 may function as a bridge connecting a wireless network with a wired network. Each wireless AP 100 may expand a wired network to a wireless network. The mobile terminal 300 may include, but is not limited to, a 3rd Generation (3G) or 4th Generation (4G) mobile communication terminal.

When the mobile terminal 300 is wirelessly linked with the wireless AP 100 through Wi-Fi modules, the mobile terminal 300 may obtain a phone number of the mobile terminal 300 through subscriber identity information. The subscriber identity information may be registered and stored in a Universal Subscriber Identity Module (USIM) of the mobile terminal 300. When a Wi-Fi wireless link is established between the mobile terminal 300 and the wireless AP 100, the mobile terminal 300 may transmit the subscriber identity information to the wireless AP 100. The wireless AP 100 may manage the subscriber identity information including the phone number of the mobile terminal 300 in an access list. For example, a fire alarm application that may recognize access of the wireless AP 100 may be installed in the mobile terminal 300. For example, when the fire alarm application recognizes access of the wireless AP 100, the mobile terminal 300 may transmit the phone number of the mobile terminal 300.

The fire alarm 200 may receive the phone number from the wireless AP 100 and may register the mobile terminal 300 as a terminal to be managed (hereinafter, referred to as a "target terminal"). The fire alarm 200 may transmit the position of the wireless APs 100 in the building and an indoor electronic map for the building to the target terminal through the wireless AP 100. When sensing a fire, the fire alarm 200 may transmit an evacuation alert message, together with the position of the fire, to the target terminal.

Referring to Fig. 2, the fire alarm 200 includes a target terminal register 210, a fire sensor 220, a message transmitter 230, and an electronic map database (DB) 240. The fire alarm 200 may further include a target terminal distribution detector 250.

The target terminal register 210 receives a phone number from the wireless AP 100 and registers the mobile terminal 300 as a target terminal. For example, when a first wireless AP gains Wi-Fi wireless access to a first mobile terminal 300 in the building as shown in Fig. 4, the target terminal register 210 of the fire alarm 200 receives a phone number from the first mobile terminal 300 and provides the received phone number to the target terminal register 210, so that the first mobile terminal 300 may be registered as a target terminal. As another example, when a second mobile terminal 300 enters the building, a second wireless AP accesses the second mobile terminal 300 and receives a phone number of the second mobile terminal 300 so that the second mobile terminal 300 may be registered as a target terminal. The target terminal register 210 of the fire alarm 200 may periodically perform wireless access to the wireless AP 100 to fetch a phone number of the mobile terminal 300 that is wirelessly linked to the wireless AP 100 from an access list and to register the mobile terminal 300 as a target terminal.

When the wireless link is disconnected for a predetermined time after the mobile terminal 300 has been registered as the target terminal, the target terminal register 210 may delete the mobile terminal 300 from the registration of target terminals. For example, when the first mobile terminal 300 wirelessly linked to the first wireless AP in the building moves to the outside of the building or to another section in the building, the Wi-Fi wireless link may be disconnected, and the first wireless AP deletes the first mobile terminal 300 from the access list when the wireless link remains disconnected for a predetermined time. The target terminal may periodically fetch the access list to grasp whether the first mobile terminal 300 is deleted from the access list and may delete the first mobile terminal 300 from the registration of target terminals.

When a user in the building moves and thus the first mobile terminal 300 moves, the first mobile terminal 300 may disconnect from the wireless link with the first wireless AP to which the first mobile terminal 300 has been first linked and may be wireless linked to a second wireless AP through Wi-Fi so that the first mobile terminal 300 may be included in the access list of the second wireless AP. Accordingly, the registration as the target terminal for the fire alarm 200 may keep on.

The fire sensor 220 may sense the outbreak and position of a fire and the direction of a flow of smoke. Sensing the outbreak of a fire may be performed in various manners. For example, the fire alarm 200 may include a heat sensor or a smoke sensor that may sensor a fire. When sensing a predetermined temperature of heat or a predetermined amount of smoke, the fire alarm 200 may determine that a fire has broken out. The fire alarm 200 may sense the position of a distribution of fire or the amount of smoke to determine where the fire has broken out or the direction in which the smoke flows. As another example, there may be a plurality of fire sub sensors distributed at multiple positions in the building, each of the fire sub sensors being able to sense a fire. The fire sensor 220 may receive the breakout of a fire from each of the fire sub sensors. For example, each fire sub sensor may include a heat sensor or a smoke sensor. The fire sub sensors may have their respective identities (IDs) that allow the position of a fire and the direction of smoke to be known.

The fire sensor 220 may send a request for capturing an image of the scene where a fire has broken out to the mobile terminal 300 wirelessly linked to the wireless AP 100 that is positioned where the fire has broken out, and the fire sensor 220 may receive a captured image of the scene and transmit the received image to, e.g., a fire station. For example, when a fire breaks out at position A, the fire sensor 220 may send a request for capturing an image of the scene of the fire to a fire alarm application run on the mobile terminal 300 wirelessly linked to the wireless AP 100 located near position A. The fire alarm apparatus run on the mobile terminal 300 may drive a camera without the user's manipulation to capture an image of the scene and transmit the captured image to the fire sensor 220 of the fire alarm 200. The fire sensor 220 may transfer the received image of the scene to the fire station.

The message transmitter 230, when the breakout of a fire is sensed, may transmit an evacuation alert message to mobile terminals 300 that are registered as target terminals. For example, when a first mobile terminal with a first phone number of 010-1234-5678 and a second mobile terminal with a second phone number of 010-1111-8765 are registered as target terminals, the message transmitter 230 may send evacuation alert messages to the first mobile terminal at the first phone number and to the second mobile terminal at the second phone number through a mobile communication network 400 that may be a 3G or 4G network. As another example, the message transmitter 230 may send evacuation alert messages through the wireless AP 100 to terminals registered in the access list of the wireless AP 100 without passing through the mobile communication network 400. The message transmitter 230 may transmit the evacuation alert messages, together with the position of the fire and the direction of the smoke to the target terminals. The position of the fire and the direction of the smoke may be used for the mobile terminal 300 to determine a direction of evacuation from the fire.

The message transmitter 230 may send the evacuation alert messages, along with a positional distribution of the mobile terminals 300 in the building, to the mobile terminals 300 registered as target terminals in the building, so that the mobile terminals 300 registered as target terminals may be aware of the positional distribution of the mobile terminals 300 in the building.

The electronic map DB 240 may include a database that stores and registers an electronic map for the inside of the building in which the wireless APs 100 are installed. The electronic map DB 240 may have an electronic map of the building registered therein upon manufacture of the fire alarm 200, and the electronic map DB 240 may be configured to be frequently updated. The electronic map DB 240 may include information on positions of the wireless APs 100 installed in the building.

The target terminal distribution detector 250 may identify the number of mobile terminals 300 linked to the wireless AP 100 and may periodically grasp the positional distribution of the mobile terminals 300 in the building. For example, when 30 mobile terminals 300 are linked to a first wireless AP located at position A in the building, two mobile terminals 300 are linked to a second wireless AP located at position B in the building, and five mobile terminals 300 are linked to a third wireless AP located at position C in the building, the target terminal distribution detector 250 may grasp a positional distribution of the mobile terminals 300 that are located at position A. For example, from the above example, it may be determined that many people are located near position A.

The mobile terminal 300 may receive and store the position of wireless APs 100 in the building and the electronic map of the inside of the building, and the mobile terminal 300, when receiving an evacuation alert message, may output a map image and an alert voice for guiding the user to an exit. The mobile terminal 300 may include an image processor 330, a Radio Frequency (RF) unit 315, a data processor 310, an audio processor 320, an input unit 350, a display 340, an AP access module 360, an electronic map storage memory 370, a locator 380, and an evacuation guiding unit 390.

The image processor 330 may generate screen data for displaying an image signal output from a camera sensor (not shown). The image processor 330 may be implemented as a separate module. The image processing may be performed by a central processing unit (CPU) of the mobile terminal 300. The image processor 330 may process an image signal transmitted from the camera sensor or the data processor 310 in frame units, and the image processor 330 may output image frames to fit the size and characteristics of the display 340. The image processor 330 may include an image codec and may compress an image frame displayed on the display 340, such as a Liquid Crystal Display (LCD), in a predetermined scheme or may restore a compressed image frame into the original image frame. The image codec may include, but is not limited to, a JPEG codec, an MPEG4 codec, or a Wavelet codec. The camera sensor may include a Charge Coupled Device (CCD) image sensor that may capture an image and convert the captured image into an electrical signal. An image captured through the camera sensor is transmitted to the image processor 330. The image processor 330 may include, e.g., an Image Signal Processor (ISP).

The RF unit 315 performs a wireless communication function as per a wireless communication protocol such as Code Division Multiple Access (CDMA). The RF unit 315 may include an RF transmitter that may upconvert and amplify the frequency of a signal transmitted and an RF receiver that may amplify a received signal to have low noise and downconvert the frequency of the signal.

The data processor 310 may include a transmitter that may code and modulate a transmitted signal and a receiver that may demodulate and decode a received. For example, the data processor 310 may include a modem and a codec. The codec may include a data codec for processing packet data and an audio codec for processing audio signals such as voice.

The audio processor 320 may play back audio signals output from the audio codec of the data processor 310 through a speaker 322 or may transmit audio signals generated by a microphone 321 to the audio codec of the data processor 310.

The input unit 350 may include various keys for inputting numbers and characters and various functional keys for inputting a diversity of functional commands. The functional keys may include, e.g., a button for turning on/off the speaker 322 or a volume control button.

The display 340 may include an LCD or an Organic Light Emitting Display (OLED). The display 340 may display a fire alert for evacuation and the electronic map of the inside of the building. The display 340 may also display a pathway for evacuation.

The AP access module 360 may enable the mobile terminal 300 to wirelessly access the wireless AP 100. The AP access module 360 may transmit the phone number of the mobile terminal 300 to the wireless AP 100 and may receive the position of the wireless APs 100 in the building and the electronic map of the inside of the building from the fire alarm 200. A fire alarm apparatus may be installed in the mobile terminal 300. The fire alarm apparatus may be driven or activated to send a request for the electronic map of the inside of the building and the position of the wireless APs in the building through the AP access module 360 to the fire alarm 200 and to receive the position and the electronic map. When the mobile terminal 300 is linked to the wireless AP 100, the AP access module 360 may receive a unique web IP address of the fire alarm 200. The AP access module 360 may access the fire alarm 200 through the unique web IP address of the fire alarm 200, go through an authentication process, and receive the electronic map and the position of the wireless APs.

The electronic map storage memory 370 stores the position of the wireless APs 100 and the electronic map received from the fire alarm 200. The electronic map storage memory 370 may be a module that may input and output information, such as a Solid State Drive (SSD), a flash memory, a Compact Flash (CF) card, a Secure Digital (SD) card, a Smart Media (SM) card, a Multi-Media Card (MMC), or a Memory Stick™. The electronic map storage memory 370 may be positioned in the mobile terminal 300 or may be provided in a separate device.

The locator 380 may sense the strength of radio signals received from, e.g., three or more wireless APs 100 to pinpoint the mobile terminal 300 in the building. A conventional Global Positioning Satellite (GPS) locator using the GPS might not be used to position a terminal in the building because a signal from the GPS might not reach the locator. Wireless APs may be used to find the position of the terminal in the building.

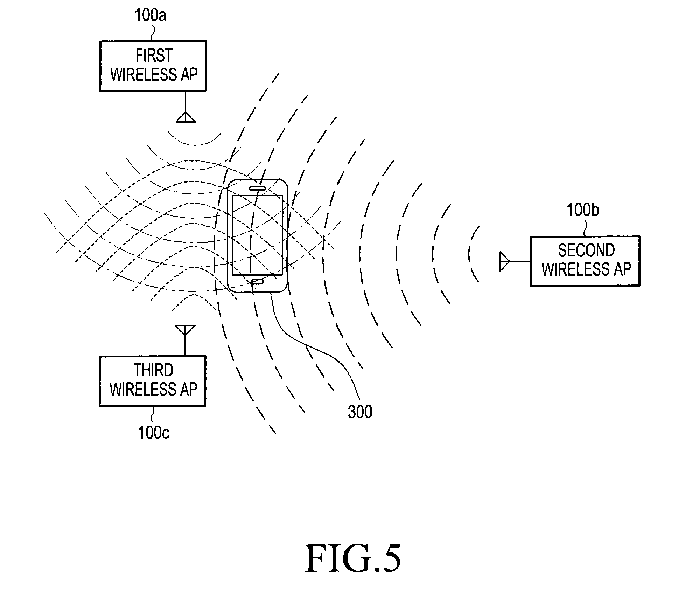

According to an embodiment of the present disclosure, indoor positioning map matching may be used to pinpoint the mobile terminal 300 using the wireless APs 100 in the building. For example, the positon of the mobile terminal 300 in the building may be known using the strength of a signal from the wireless AP 100 located near the mobile terminal 300. For example, when the mobile terminal 300 is positioned within a range in which the mobile terminal 300 may sense signals from a first wireless AP 100a, a second wireless AP 100b, and a third wireless AP 100c as shown in Fig. 5, the mobile terminal 300 may measure the strength of the signal from each of the first wireless AP 100a, the second wireless AP 100b, and the third wireless AP 100c. The signals from the wireless APs 100a, 100b, and 100c are different in strength depending on the distance between each wireless AP 100a, 100b, and 100c and the mobile terminal 300. The mobile terminal 300 may include information on the position of the wireless APs 100a, 100b, and 100c in the building. The position of the mobile terminal 300 in the building may be determined through triangulation using the position of the wireless APs 100a, 100b, and 100c.

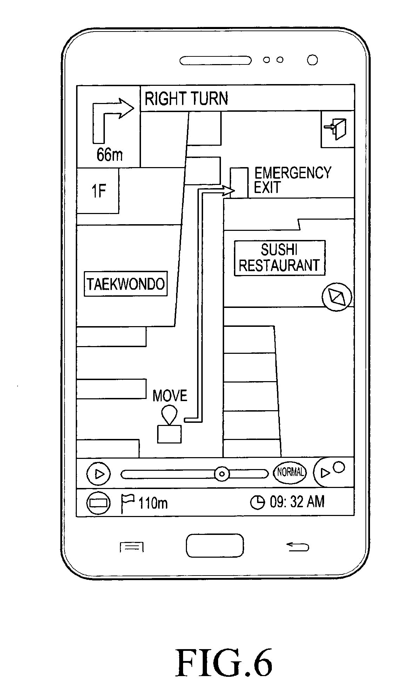

The evacuation guiding unit 390, when an evacuation alert message is received from the fire alarm 200, may grasp an exit adjacent to the mobile terminal 300 in the building on the electronic map and may output a map image and a voice message for guiding evacuation. For example, when the first mobile terminal 300 is positioned adjacent to the third emergency exit, the evacuation guiding unit 390 may guide the user in a direction from the current position of the first mobile terminal 300 to the first exit. For example, the evacuation guiding unit 390 may output a voice message speaking out, e.g., "go right to the third emergency exit" or "go left to the third emergency exit." The evacuation guiding unit 390 may guide the direction of evacuation like, e.g., a navigation system. For example, as shown in Fig. 6, the evacuation guiding unit 390 may display the current position of the mobile terminal 300 and an arrow directing to the third emergency exit as shown in Fig. 6. As the user of the mobile terminal 300 moves, the direction of evacuation may be displayed reflecting the movement of the user as in a navigation system.

The evacuation guiding unit 390, when guiding the evacuation, may indicate the exit or emergency exit around which the distribution of mobile terminals 300 is smallest. For example, when the building has a first emergency exit, a second emergency exit, and a third emergency exit, and more users are positioned adjacent to the first emergency exit than the second and third emergency exits, the evacuation guiding unit 390 may guide a user, although the user is near the first emergency exit, to the second or third emergency exit.

The evacuation guiding unit 390 may guide a user to an emergency exit farthest from the position of a fire among the emergency exits to which a flow of smoke is directed in the building.

While the inventive concept has been shown and described with reference to exemplary embodiments thereof, it will be apparent to those of ordinary skill in the art that various changes in form and detail may be made thereto without departing from the spirit and scope of the inventive concept as defined by the following claims.

## Claims

1. A fire alarm apparatus interworking with a mobile terminal, the fire alarm apparatus comprising:
a plurality of wireless Access Points (APs) provided in a building, the plurality of wireless APs wirelessly accessing a mobile terminal entering the building to receive a phone number from the mobile terminal;
a fire alarm receiving the phone number from the wireless APs to register the mobile terminal as a target terminal, transmitting positions of the wireless APs in the building and an electronic map of an inside of the building to the target terminal through the wireless APs, and when sensing a fire, transmitting a position of the fire and an alert message to the target terminal; and
the mobile terminal receiving and storing the positions of the wireless APs and the electronic map, and when receiving the alert message, outputting a map image and a voice message for guiding to an exit, wherein the mobile terminal includes:
an AP access module wirelessly accessing the wireless APs to transmit the phone number of the mobile terminal and to receive the positions of the wireless APs and the electronic map;
an electronic map storage memory storing the positions of the wireless APs and the electronic map received from the fire alarm;
a locator sensing the strength of radio signals received from at least three wireless APs to pinpoint the mobile terminal in the building; and
an evacuation guiding unit grasping an exit adjacent to the mobile terminal in the building on the electronic map to indicate a direction of evacuation when the alert message is received.

2. The fire alarm apparatus of claim 1, wherein the fire alarm includes:
a target terminal register receiving the phone number of the wireless APs and registering the mobile terminal as the target terminal;
a fire sensor sensing an occurrence of the fire, the position of the fire, and a direction in which smoke flows;
a message transmitter transmitting the alert message to the target terminal when the occurrence of the fire is sensed; and
an electronic map database (DB) storing the electronic map and the positions of the wireless APs.

3. The fire alarm apparatus of claim 2, wherein when a wireless link is disconnected for a predetermined time after the mobile terminal is registered as the target terminal, the target terminal is deleted from a target terminal registration.

4. The fire alarm apparatus of claim 2, wherein the fire alarm sends a request for capturing an image of a scene of the fire to a mobile terminal wirelessly linked to a wireless AP located adjacent to the fire, receives the captured image, and transmits the received captured image to a fire station.

5. The fire alarm apparatus of claim 1, wherein the fire alarm includes a target terminal distribution detector identifying the number of mobile terminals wirelessly linked to a wireless AP to grasp a positional distribution of the mobile terminal in the building.

6. The fire alarm apparatus of claim 2, wherein the message transmitter transmits a positional distribution of mobile terminals in the building and the alert message to the target terminal, wherein the evacuation guiding unit, at a highest priority, guides the target terminal to an exit where a positional distribution of the mobile terminals in the building is smallest among a plurality of exits in the building.

7. The fire alarm apparatus of claim 2, wherein the message transmitter transmits the position of the fire and the direction in which the smoke flows and the alert message to the target terminal in the building.

8. The fire alarm apparatus of claim 7, wherein the evacuation guiding unit guides the target terminal to an exit farthest from the position of the fire among exits to which the flow of smoke is directed.
